Europäisches Patentamt

European Patent Office

Office européen des brevets

(11) Numéro de publication: **0 002 998**
**B1**

## FASCICULE DE BREVET EUROPEEN

(21) Numéro de dépôt: **78430022.0**

(22) Date de dépôt: **08.12.78**

(51) Int. Cl.³: **H 04 B 1/66, G 10 L 1/08**

(54) **Procédé de compression de données relatives au signal vocal et dispositif mettant en oeuvre ledit procédé**

(30) Priorité: **23.12.77 FR 7739912**

(43) Date de publication de la demande:
**11.07.79 Bulletin 79/14**

(45) Mention de la délivrance du brevet:
**15.10.80 Bulletin 80/21**

(84) Etats contractants désignés:
**DE FR GB**

(56) Documents cités:
**FR - A - 2 191 797**

(73) Titulaire: **International Business Machines Corporation**
**Armonk, N.Y. 10504 (US)**

(72) Inventeur: **Esteban, Daniel Jacques**
**La Fenière Le Peymond**
**06610 La Gaude (FR)**
**Galand, Claude Robert**
**Le Suy Blanc**
**06610 La Gaude (FR)**
**Mauduit, Daniel**
**18 avenue Cap de Croix**
**06100 Nice (FR)**
**Menez, Jean**
**4 avenue de Cannes**
**Résidence de l'Hippodrome B**
**06800 Cagnes sur Mer (FR)**

(74) Mandataire: **Buff, Henri C.**
**COMPAGNIE IBM FRANCE**
**Département de Propriété Industrielle**
**06610 La Gaude (FR)**

Courier Press, Leamington Spa, England.

# 0 002 998

Procédé de compression de données relatives au signal vocal et dispositif mettant en oeuvre
ledit procédé

## Domaine technique de l'invention
L'invention traite du codage de la voix à faible taux de bits, ou plus précisément du transcodage numérique conduisant à une compression du signal de parole.

## Etat de la technique
Les opérations de traitement d'un signal variable dans le temps, qu'elles soient destinées à en permettre l'enregistrement, la transmission, ou à le modifier pour les besoins de l'application, peuvent être réalisées soit analogiquement, soit numériquement. Le traitement analogique suppose en général l'emploi de moyens encombrants et onéreux. On lui préfère souvent les techniques numériques, bien qu'elles impliquent, la traduction numérique préalable du signal à traiter. Pour ce faire, le signal est tout d'abord échantilloné, puis quantifié, pour être exprimé en mots codés en binaire. Cela suppose, évidemment, en fin de traitement, un décodage du signal ramenant l'information sous forme analogique, donc intelligible à l'homme. Mais codage et décodage altèrent l'information. On dit qu'ils introduisent des bruits, tel le bruit de quantification par exemple. La réduction de ces bruits peut être obtenue par une quantification aussi précise que possible. Or, lors de la réalisation des opérations de quantification, tous les échantillons dont l'amplitude se situe entre deux valeurs numériques consécutives, sont traduits en une même valeur numérique. Il en résulte naturellement une imprécision de transcription d'autant plus importante que le nombre de valeurs numériques utilisables pour le codage du signal est faible. Il semble donc indispensable d'accroître ce nombre, donc d'utiliser un taux de bits de codage plus élevé pour améliorer les qualités du codage. Ceci est fort regrettable car il en résulte, la cas échéant, un encombrement des canaux destinés à véhiculer ces bits, des mémoires destinées à les stocker et des circuits destinés à les traiter, ce qui a une incidence directe sur le coût du matériel utilisé.

De nombreuses solutions ont été proposées pour améliorer la qualité du codage tout en minimisant le nombre de bits de quantification. Mais elles demeurent partielles et souvent onéreuses. D'où l'intérêt de solutions tendant à réduire le taux de bits de codage à qualité équivalente, ou, inversement tendant à améliorer la qualité du codage pour un taux de bits donné.

La présente invention a pour objet un procédé améliorant la qualité du codage pour un taux de bits global donné.

Elle a aussi pour objet un dispositif de mise en oeuvre dudit procédé.

On notera que l'on désire effectuer en numérique la majorité du traitement du signal requis dans le cadre de la présente invention. Cela suppose un échantillonnage et une quantification préalable du signal, utilisant des méthodes classiques et un taux de bits suffisamment élevé pour minimiser les bruits, puis un recodage à taux de bits plus faible. On parle alors de compression de l'information par transcodage.

Comme, en outre, on tirera bénéfice des propriétés spécifiques à la voix humaine, on peut dire que l'invention a pour objet un procédé de compression de la voix.

Elle a encore pour objet, un transcodeur numérique mettant en oeuvre ledit procédé.

D'autres objets, caractéristiques et avantages de la présente invention ressortiront mieux de l'exposé qui suit, fait en référence aux dessins annexés à ce texte, qui représentent un mode de réalisation préféré de celle-ci.

## Brève description des figures
Figure 1: un codeur selon l'invention.
Figures 2 à 7: des modes de réalisation des éléments du codeur de la figure 1.
Figure 8: un décodeur selon l'invention.
Figure 9: le détail d'un des éléments de la figure 8.
Figures 10 et 11: des modes de réalisation de certains éléments du décodeur de la figure 8.

## Exposé de l'invention
Un codage binaire à N bits permet de définir $2^N$ valeurs numériques distinctes. Pour réaliser ce codage, on découpe le champ de variation de l'amplitude du signal à coder en $2^N$ zones distinctes. En conséquence, plus la dynamique du signal est faible, plus le codage est précis.

Tenant compte des caractéristiques du signal vocal, Chong Kwan Un et D. Thomas Magill ont, dans un article publié dans IEEE Transactions on Communications, Vol. COM 23, No. 12 de décembre 1975, proposé d'en réduire la dynamique, par une opération de déconvolution avant d'en coder la bande de base par un modulateur delta. La déconvolution suppose l'utilisation d'un filtre numérique auto-adaptatif. Ce filtrage exige une puissance de traitement numérique importante. En outre, avec un tel montage, on a tout intérêt à quantifier différemment les coefficients selon qu'ils sont destinés aux opérations de déconvolution ou à leur transmission vers le dispositif de reconstitution du signal vocal. Cela augmente encore la puissance de calcul dont on pouvait penser avoir besoin pour réaliser l'ensemble du codeur-décodeur.

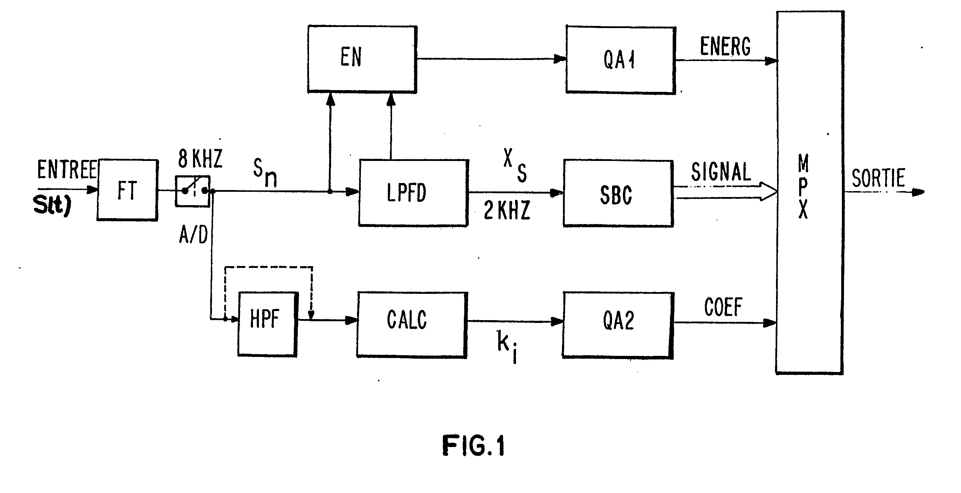

La présente invention apporte des remèdes à ces inconvénients. Pour ce faire, comme le montre

2

le codeur de la figure 1, le signal vocal S(t) appliqué à l'entrée est filtré en FT de manière à n'occuper qu'une bande téléphonique (300—3400 Hz par exemple), puis échantillonné à 8 KHz quantifié en A/D à un taux de bits relativement élevé (12 bits par échantillon par exemple). Il fournit un signal dont le $n^{ième}$ échantillon est désigné par $S_n$ (dans la suite de la description on pourra utiliser la même référence pour désigner le signal lui-même et ses échantillons). Ce signal est transmis à la fois à un filtre passe-bas décimateur LPFD et à un filtre passe-haut HPF. Les bandes passantes de l'ensemble de ces deux filtres peuvent être complémentaires et couvrir la bande téléphonique sus-mentionnée. La sortie de HPF alimente un dispositif de détermination de coefficients désigné par CALC dont on verra l'utilité plus loin. Les données sortant de CALC seront éventuellement requantifiées en QA2 pour engendrer une information désignée par COEF. Le signal sortant du filtre LPFD, dont le spectre ne s'étend que jusqu'à 800 Hz, est constitué d'échantillons $X_s$ fournis à une fréquence de 2 KHz. Les $X_s$ sont requantifiés en SBC par blocs de K échantillons. Cette requantification met en jeu les techniques décrites dans la demande de brevet intitulée: "Procédé de quantification à allocation dynamique du taux de bits disponible, et dispositif de mise en oeuvre dudit procédé", déposée en France par la demanderesse le 29 avril 1977 sous le numéro 77 13995, et publié le 24 novembre 1978 sous le numéro 2 389 277 Il en résulte des données numériques désignées par SIGNAL. La sortie du filtre décimateur LPFD permet aussi d'engendrer en EN une information représentant l'énergie de la bande haute du signal d'entrée, que l'on requantifie éventuellement en QA1, engendrant ainsi une information désignée par ENERG. Dans le cas où le transcodeur que l'on pourra désigner ultérieurement par codeur, de l'invention est utilisé dans le cadre d'une transmission numérique, les données ENERG, SIGNAL et COEF sont multiplexées par le dispositif désigné par MPX, sur une ligne unique de transmission, en appliquant les techniques classiques en la matière. Les dispositifs QA1 et QA2 sont des quantificateurs classiques que l'on utilisera si l'on désire requantifier les signaux sortant de EN et CALC.

On a utilisé un filtre FT analogique ayant une bande passante comprise entre 300 et 3400 Hz. De même, le convertisseur initial A/D utilise des techniques connues et fournit des échantillons $S_n$ quantifiés linéairement à 12 bits se présentant à une fréquence de 8 KHz.

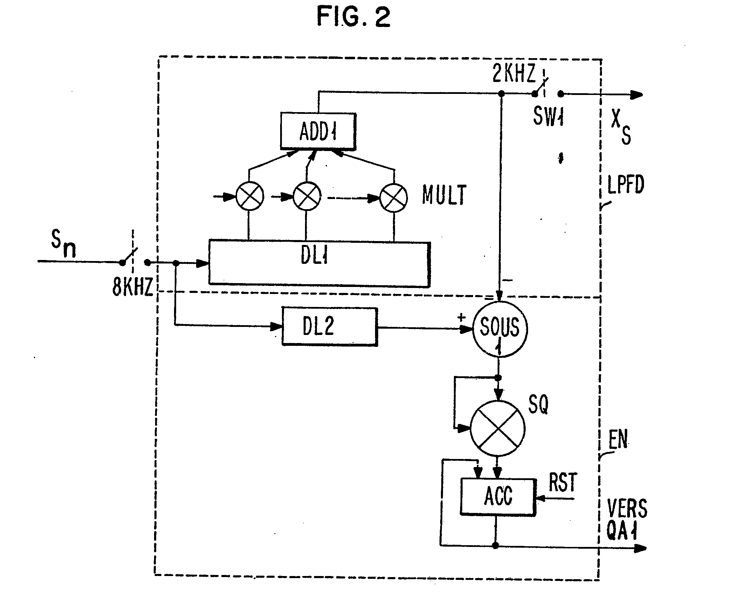

La figure 2 montre un mode de réalisation des dispositifs LPFD et EN. Les échantillons $S_n$ y sont introduits dans deux lignes à retard, l'une désignée par DL1, l'autre par DL2. DL1, qui est deux fois plus longue que DL2, appartient à un filtre numérique comportant en outre des multiplicateurs MULT et un additionneur ADD1. Ces éléments sont choisis de manière à réaliser un filtre passe-bas coupant à 800 Hz et de gain unitaire dans la bande passante. La fréquence des échantillons $X_s$ issus de LPFD est ramenée à 2KHz par prélèvement d'un échantillon sur quatre à la sortie du filtre transversal. Cette dernière opération, dite de décimation est réalisée à l'aide d'un commutateur SW1 fermé à une fréquence de 2 KHz.

L'information sur l'énergie de la bande hautes fréquences du signal vocal, bande allant de 800 à 3400 Hz, est obtenue en soustrayant en SOUS1 les échantillons issus de ADD1 de ceux issus de DL2, en élevant au carré en SQ les termes sortant de SOUS1 et en accumulant en ACC la sortie de SQ sur la durée d'un bloc d'échantillons, soit 32 ms dans l'exemple considéré. Un signal RST est utilisé pour remettre ACC à zéro une ou plusieurs fois toutes les 32 ms. L'accumulateur peut aussi être remplacé avantageusement par un filtre numérique passe bas, décimateur, c'est-à-dire comportant un commutateur dont la fréquence de commutation est réglée en fonction de la fréquence à laquelle on désire utiliser l'information d'énergie correspondante (1 à 4 fois toutes les 32 ms dans l'exemple choisi). Si on le désire, on peut requantifier en QA1 l'information d'énergie, à un taux de bits plus faible que celui des termes sortant de EN, de manière à assurer une réduction du taux d'information.

Les échantillons $X_s$ issus de SW1 sont requantifiés en SBC. Pour ce faire, le spectre des échantillons $X_s$ est d'abord soumis à un découpage en sous-bandes.

Chaque sous-bande est ensuite soumise à une quantification dynamiquement adaptée aux caractéristiques du signal qu'elle contient. Les procédés et dispositifs utilisés à cet effet ont été décrits dans la demande de brevet français citée plus haut. On démontre en effet que le taux de bits $n_i$ à affecter à la quantification de la $i^{ième}$ sous-bande de manière à minimiser l'erreur globale de quantification sur l'ensemble des sous-bandes obéit à la relation suivante:

$$n_i = \frac{N - \log_2 \prod_{j=1}^{p} E_j^{1/2}}{p} + \log_2 E_i^{1/2} = \sigma' + \log_2 E_i^{1/2} \tag{1}$$

où:

$$\sigma' = \frac{N - \log_2 \prod_{j=1}^{p} E_j^{1/2}}{p}$$

3

N représente le taux de bits pour l'ensemble des sous-bandes,

$E_i$ représente l'énergie contenue dans la $i^{ième}$ sous-bande lors du traitement du bloc d'échantillons correspondant.

p représente le nombre de sous-bandes dont la juxtaposition couvre l'ensemble du spectre du signal $X_s$.

Naturellement, $n_i$ indiquant un nombre de bits, on ne conserve en fait, du résultat de l'opération (1), qu'une valeur entière approchée.

Les ajustements du quantificateur sont effectués la durée d'un bloc, soit 32 ms pour l'exemple considéré (on suppose qu'à l'entrée du codeur, les $S_n$ ont été prélevés par blocs de K=256 échantillons, à une fréquence de 8 KHz). On peut donc, durant ces 32 ms, déterminer les limites d'amplitude dans lesquelles le signal de chaque sous-bande varie, et, connaissant le taux de bits $n_i$ alloué, en déduire la valeur à laquelle doit être fixé le pas $Q_i$ du quantificateur correspondant. A titre d'exemple, si l'on suppose que l'amplitude de la $i^{ième}$ sous-bande varie uniformément entre deux valeurs extrêmes distantes l'une de l'autre de dix volts et que le nombre (taux) de bits qui lui est alloué est $n_i=1$, on conviendra de prendre un pas $Q_i = 5$ volts. Ceci signifie que tous les échantillons supérieurs à 0 volt seront codés par un "1", ceux inférieurs à 0 volt par un zéro, ou inversement.

Lorsque le découpage en sous-bandes, dans le domaine fréquentiel est suffisamment fin, le spectre dans chaque canal est relativement décorrelé. On admettra alors que l'énergie de la sous-bande est proportionnelle au carré de l'amplitude du plus grand (en valeur absolue) échantilon (M) qu'elle contient. D'où, pour la $i^{ième}$ sous-bande:

$$E_i = \lambda . M_i^2 \tag{2}$$

$\lambda$ étant un coefficient de proportionnalité.

En combinant les expressions (1) et (2) on obtient:

$$n_i = \left[ \frac{1}{p} \quad N - \log_2 \prod_{j=1}^{p} M_j \right] + \log_2 M_i \tag{3}$$

$$= \sigma + \log_2 M_i$$

où:

$$\sigma = \left[ N - \log_2 \prod_{j=1}^{p} \right] M_j$$

Il est peu vraisemblable que partant des formules ci-dessus et adoptant pour $n_i$ une valeur entière approchée du résultat calculé, on obtienne:

$$\sum_{i=1}^{p} n_i = N \tag{4}$$

Mais une fois que l'on disposera des différentes valeurs de $n_i$ pour l'ensemble des sous-bandes, on procèdera à un réajustement de ces valeurs de manière à vérifier l'expression (4). Ce réajustement se fait par une redistribution de bits en ajoutant ou soustrayant des unités à certains $n_i$.

La conversion préalable analogique/numérique en A/D a été effectuée de façon classique avec un taux de bit N' élevé de manière à assurer une précision suffisante, puis le dispositif de l'invention sert à requantifier (ou transcoder) les échantillons du signal de manière à réduire éventuellement le taux de bits global utilisé sur l'ensemble des sous-bandes ou tout au moins à répartir les N bits disponibles de manière plus rationnelle. On définit donc N < N'. (On pourra dans certains cas choisir N = N', il n'y aura pas alors de véritable compression, mais une meilleure distribution des bits).

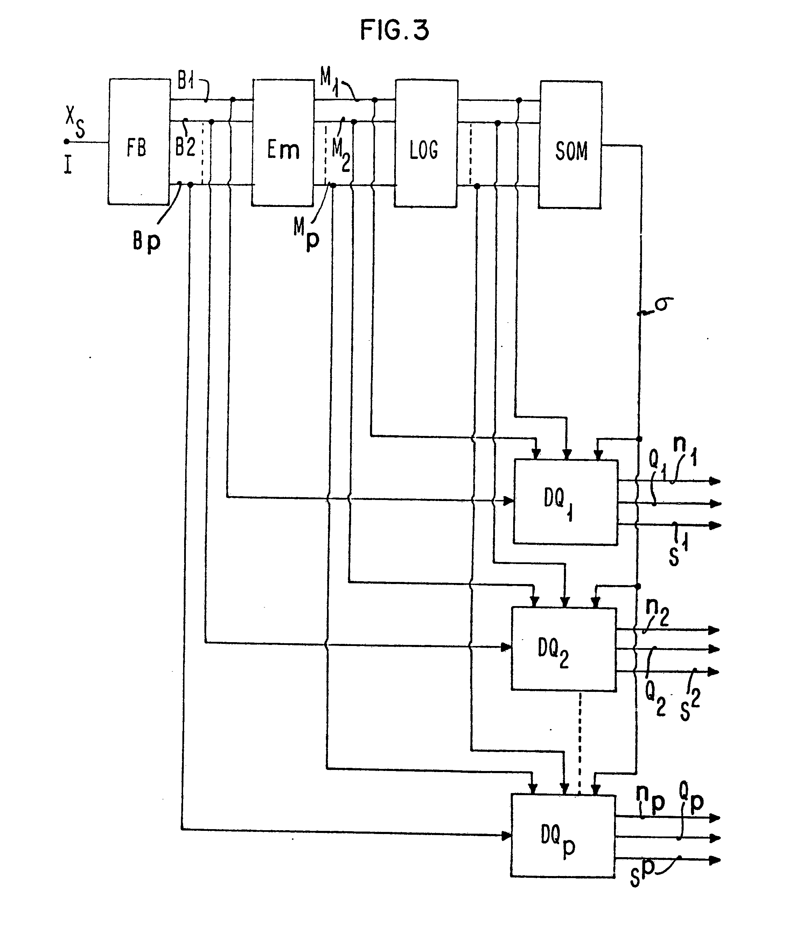

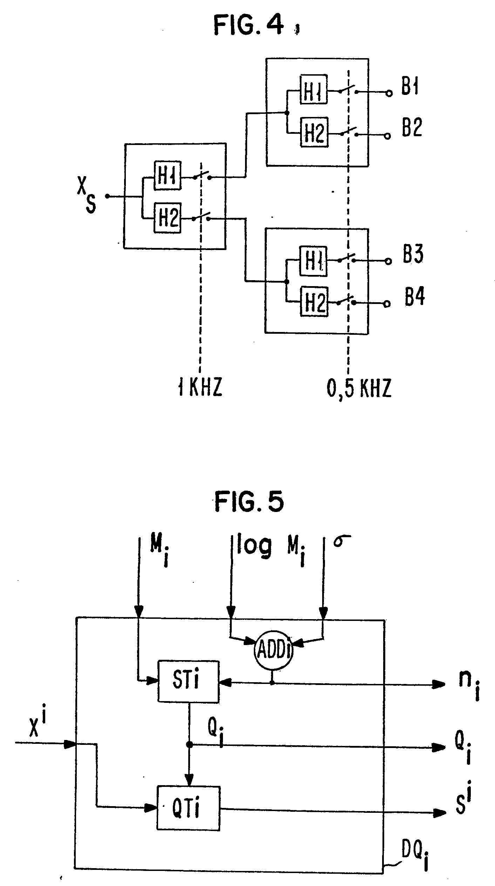

Le dispositif SBC décrit la figure 3 permet la mise en oeuvre du procédé de quantification décrit ci-dessus. Les échantillons $X_s$ y sont transmis à un banc de filtres FB. Celui-ci répartit le signal en p sous-bandes (B1 à Bp). Chaque sous-bande contient alors des échantillons $x^i$ (avec i = 1, 2, ..., p) désignant le rang de la sous-bande considérée. Ce banc de filtres FB est réalisé selon le schéma de la figure 4. Les échantillons $X_s$ y sont filtrés par un système ayant une structure en arbre et composé de cellules semblables. Chaque cellule comporte deux filtres demi-bande en quadrature (H1 et H2) et des interrupteurs permettant de ne prendre sur chacune des sorties desdits filtres, qu'un échantillon sur deux, réalisant ainsi une opération de décimation associée au filtrage par H1 ou H2. Pour plus de précisions sur ce type de filtrage, on se reportera à l'article publié dans l'IBM Technical Disclosure Bulletin, Vol. 19, No. 9, de février 1977, pages 3438 et 3439. L'opération de décimation permet, en partant d'une fréquence $f_e$ d'apparition des $X_s$, égale à 2 KHz, d'aboutir à quatre voies ou sous-bandes B1 à B4 dans le cas où on a choisi p=4. Sur chacune de ces voies les échantillons circulent à une fréquence de 0,5 KHz.

Un dispositif de mesure d'énergie Em, figure 3, effectue sur chaque sous-bande, un tri des échantillons qu'il reçoit durant un laps de temps donné, de manière à déterminer le plus grand d'entre eux en valeur absolue (M). Autrement dit, Em détermine les valeurs $M_i$ pour i = 1, 2, ..., p. Ces valeurs sont alors soumises à un générateur de logarithme LOG qui peut être une simple table à lecture directe, dans laquelle on a enregistré les coordonnées de points de la fonction $y = 2^x$ ou un microprocesseur dont le programme permet de calculer le logarithme de base deux de $M_i$ à partir d'une expression de développement limité classique. Les valeurs log $M_i$ sont ensuite soumises à un additionneur SOM qui les additionne avec un gain

$$\frac{1}{p}$$

et retranche le résultat de cette opération de la valeur N/p prédéterminée. Le dispositif SOM engendre donc le terme $\sigma$ de l'expression (3). On dispose alors de toutes les informations permettant de procéder à la quantification des sous-bandes. Pour simplifier l'exposé, on a supposé ici que chaque sous-bande était quantifiée séparément. Soit $DQ_i$ le dispositif quantifiant la $i^{ième}$ sous-bande. Comme le montre la figure 5, $DQ_i$ comprend: un additionneur ADDi, un générateur de pas de quantification STi et un quantificateur proprement dit QTi. L'opération d'addition, en ADDi, des valeurs de log $M_i$ et de $\sigma$ fournit $n_i$, dont on se sert en STi pour engendrer le pas de quantification $Q_i$.

$$Q_i = \frac{M_i}{2^{n_i-1}} \qquad (5)$$

L'information $Q_i$ étant fournie au quantificateur QTi, celui-ci requantifie les $X^i$ avec le taux de bits $n_i$, engendrant ainsi une nouvelle séquence numérique $S^i$.

Si l'on suppose, à titre d'exemple que $n_i=1$, le pas de quantification

$$Q_i = M_i.$$

Le dispositif QTi, effectue une simple détection du signe de $X^i$. Lorsque $X^i \geq 0$, QTi fournira $S^1 = 1$, tandis que lorsque $X^i < 0$, il fournira $S^i = 0$.

Ainsi les $X^i$ initialement codés en PCM à N' bits (12 bits par exemple) se trouvent recodés à $n_i = 1$ bit.

Grâce au quantificateur SBC que l'on vient de décrire, non seulement on peut réaliser une économie de bits de quantification globale en choisissant, si l'on veut N < N' mais en outre ces bits de quantification sont répartis rationnellement.

Comme on l'a vu plus haut, le fonctionnement de SBC requiert l'analyse du contenu des sous-bandes sur un laps de temps prédétermine. Ce faisant, il semble peu rationnel de changer de $n_i$ et de pas de quantification pour chaque échantillon. Par contre, ce procédé est particulièrement adapté au codage par blocs d'échantillons du type dit BCPCM que l'on peut résumer comme suit: pour chaque bloc d'échantillons on choisit un facteur d'échelle C tel que le plus grand échantillon du bloc ne tombe pas en dehors des limites du codage. Puis on quantifie les échantillons du bloc. L'ensemble constitué par le facteur d'échelle (ou caractéristique du bloc) et les échantillons du bloc, une fois quantifiés, fournit l'information numérique définissant complètement le bloc. Pour plus de précision sur ce type de codage, on pourra se reporter à l'article de A. Croisier relatif à une présentation faite au Séminaire International de Communications numériques de 1974 à Zürich. Dans la présente invention, $n_i$ sera défini pour la durée de chaque bloc.

On peut prendre pour facteur d'échelle de la $i^{ième}$ sous-bande $C_i$, la valeur de $M_i$ ou une valeur proche de celle-ci, auquel cas l'expression (3) devient:

$$n_i = \frac{N - \log_2 \prod_{j=1}^{p} C_j}{p} + \log C_i \qquad (6)$$

Naturellement, lorsque l'on voudra décoder le signal de manière à reconstituer l'information S(t) d'origine, on aura besoin non seulement des $S^i$ de chaque canal, mais aussi des $C_i$. Si l'on utilise ce type de codeur-décodeur dans le domaine des communications on peut réduire l'encombrement des voies en ne transmettant pas les $n_i$, puisqu'ils peuvent être recalculés au niveau de récepteur à partir de la formule (6). Pour l'ensemble des p sous-bandes et pour chaque intervalle de temps de 32 ms, on transmet donc p valeurs de $Q_i$, p valeurs de $C_i$ et les K valeurs d'échantillons du signal requantifiés par les dispositifs de l'ensemble des p canaux de l'invention.

En outre, compte tenu des caractéristiques du signal que l'on veut quantifier, on peut améliorer les performances du codeur en forçant constamment à zéro certains termes $n_i$, notamment ceux relatifs aux sous-bandes extrêmes en-dessous de 300 Hz et au-dessus de 800 Hz (i minimum et i maximum).

Comme le montre la figure 1, les échantillons $S_n$ sont aussi transmis à un filtre passe haut qui élimine les composantes du signal dont les fréquences se trouvent en-dessous de 800 Hz. Ce filtre peut être d'un type classique. Sa sortie alimente le dispositif CALC, déterminant des coefficients caractéristiques du signal vocal en traitement. Pour bien comprendre l'origine et la rôle de ces coefficients on peut se référer à l'article de L. S. Moye intitulé "Digital Transmission of Speech at Low Bit Rates" publié au Vol. 47, No. 4 de la revue Electrical Communications de 1972, pages 217 et suivantes. L'auteur y montre la nature redondante du signal vocal, d'où il ressort que chacun de ses échantillons peut être estimé à partir d'une combinaison linéaire d'échantillons précédents par la formule:

$$\hat{S}_n = \sum_{i=1}^{g} a_i \cdot S_{n-1}$$

g étant un nombre entier prédéterminé. De nombreuses méthodes ont été proposées pour calculer les coefficients $a_i$. On retiendra notamment la méthode d'autocorrélation présentée par F. Itakura et S. Saito à la Conférence de 1969 de l'Association d'Acoustique du Japon, sous le titre "Speech Analysis — Synthesis System Based on Partial Autocorrelation Coefficient". Cette méthode tendant à minimiser l'erreur quadratique moyenne ER obéissant à la relation

$$ER = \sum_{n=1}^{K} (S_n - \hat{S}_n)^2 = \sum_{n=1}^{K} (S_n - \sum_{i=1}^{g} a_i S_{n-1})^2$$

effectue une estimation globale dans laquelle on part de l'hypothèse que le signal est nul en dehors de l'intervalle occupé par le bloc à traiter. De nombreux auteurs ont montré que la minimisation de ER était obtenue si l'on avait:

$$R_j = \sum_{i=1}^{g} a_i \cdot R_{|j-1|} \text{ avec } j=1, 2, \ldots, g \tag{7}$$

avec

$$R_j = \sum_{n=1}^{K-1} S_n \cdot S_{n+|j|} \text{ avec } j=0, 1, \ldots, g \tag{8}$$

En faisant varier j et i, on obtient une série d'équations linéaires dans lesquelles les termes R représentent les échantillons de la fonction d'autocorrélation du signal vocal. Il faut cependant tenir compte des hypothèses de départ, à savoir que l'on a supposé, pour les besoins du calcul des coefficients de corrélation, que le signal était nul en dehors du bloc d'analyse. Si l'on tient compte de cette hypothèse on peut écrire le tableau joint en annexe (page 9).

Cette méthode a été notamment décrire dans un article intitulé "Experimental Comparison Between Stationary and Non Stationary Formulation of Linear Prediction Applied to Voiced Speech Analysis" publié par Satish Chandra et Wen C. Lin dans la revue IEEE Transactions on Acoustics, Speech and Signal Processing Vol. ASSP22, No. 6 de décembre 1974.

Partant des termes $R_j$, les paramètres $a_i$, peuvent être obtenus de façon récursive à l'aide d'un algorithme proposé par Levinson dans le Journal of Mathematics and Physics Vol. 25, No. 4, page 261, 1947. En fait les algorithmes du genre Levinson font apparaître des coefficients k dits de corrélation partielle. Ce sont ces coefficients que le dispositif CALC de la figure 1 définira. Pour ce faire, on utilisera notamment les méthodes et algorithmes proposés par J. Le Roux et C. Gueguen dans un article publié par IEEE Transactions on Acoustics, Speech and Signal Processing de juin 1977.

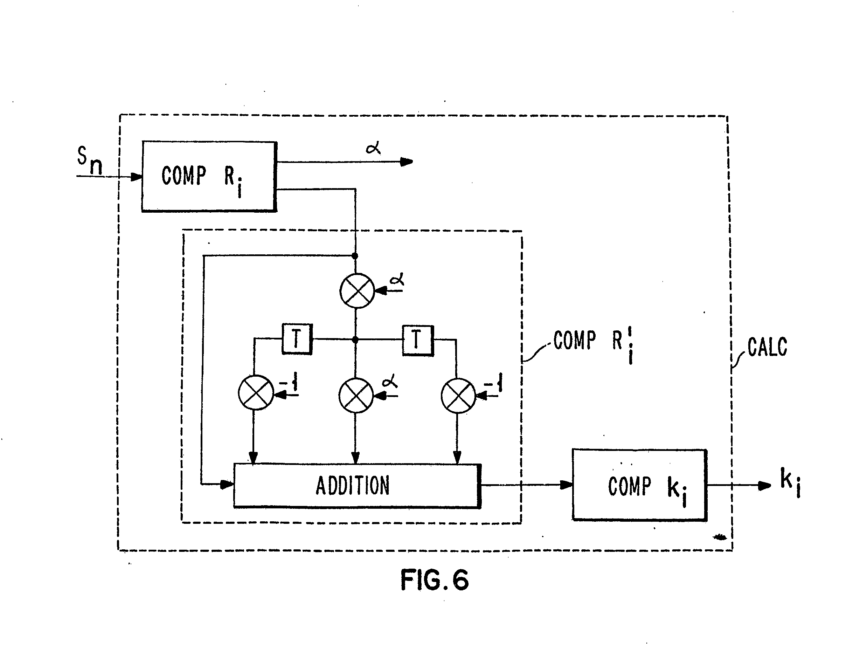

En outre, on peut compenser les effets combinés de la source glottale et de la cavité buccale qui entraînent une décroissance du spectre du signal vocal à 6 db par octave, particulièrement sensible dans le cas des sons voisés, en imposant un traitement de pré-emphase au signal avant de la soumettre au calcul des coefficients d'autocorrélation. Cette pré-emphase est réalisée à l'aide d'un filtre ayant une fonction de transfert en z de la forme

**0 002 998**

$$H(z) = 1 - \alpha\, z^{-1}$$

où $\alpha = R1/RO$, RO et R1 étant les deux premiers points de la fonction d'autocorrélation de $S_n$. Ceci étant, on serait donc obligé de calculer les premiers termes de la fonction d'autocorrélation du signal $S_n$, de déterminer

$$\alpha = \frac{R1}{RO},$$

puis filtrer les $S_n$ à l'aide du filtre de pré-emphase $H(z) = 1 - \alpha\, z^{-1}$ et recalculer les termes de la fonction d'autocorrélation. On évitera le filtrage par $H(z)$ et ainsi on économisera sur la puissance de calcul globale requise pour les opérations de pré-emphase et d'autocorrélation en incorporant dans CALC, un filtre numérique du genre décrit sur la figure 6. Ce filtre est placé à la sortie du dispositif calculant les termes RO, R1, et il en déduit directement les valeurs R'0, R'1,... de la fonction d'autocorrélation tout comme si le signal entrant dans CALC avait été soumis à une pré-emphase. Le reste de la méthode de Le Roux menant à la détermination des coefficients de corrélation partielle reste inchangé. En d'autres termes, les échantillons $S_n$ issus du filtre HPF sont introduits dans un générateur de fonctions d'autocorrélation qui pour la $i^{ème}$ sous-bande est désigné par COMP $R_i$. Ce dispositif effectue les opérations de l'expression (8). Il comporte une mémoire contenant deux blocs de données consécutifs et des circuits multiplicateurs calculant

$$RO = \sum_{n=0}^{K-1} S_n^2 = S_0^2 + S_1^2 + \ldots + S_{K-1}^2$$

$$R1 = \sum_{n=0}^{K-2} S_n \cdot S_{n+1} = S_0 S_1 + S_1 S_2 + \ldots S_{K-2}\, S_{K-1}$$

$$R_g = \sum_{n=0}^{K-g} S_n \cdot S_{n+|g|}$$

$$R_{g+1} = \sum_{n=0}^{K-(g-2)} S_n \cdot S_{n+|g+1|}$$

En divisant R1 par RO, COM $R_i$ détermine $\alpha$. Ce coefficient est utilisé dans un circuit COMP $R'_i$ ou filtre de pré-emphase calculant des coefficients $R'_i$ obéissant à la relation

$$R'_i = R_i + \alpha\,(-R_{|i-1|} + \alpha\, R_i - R_{|i+1|}).$$

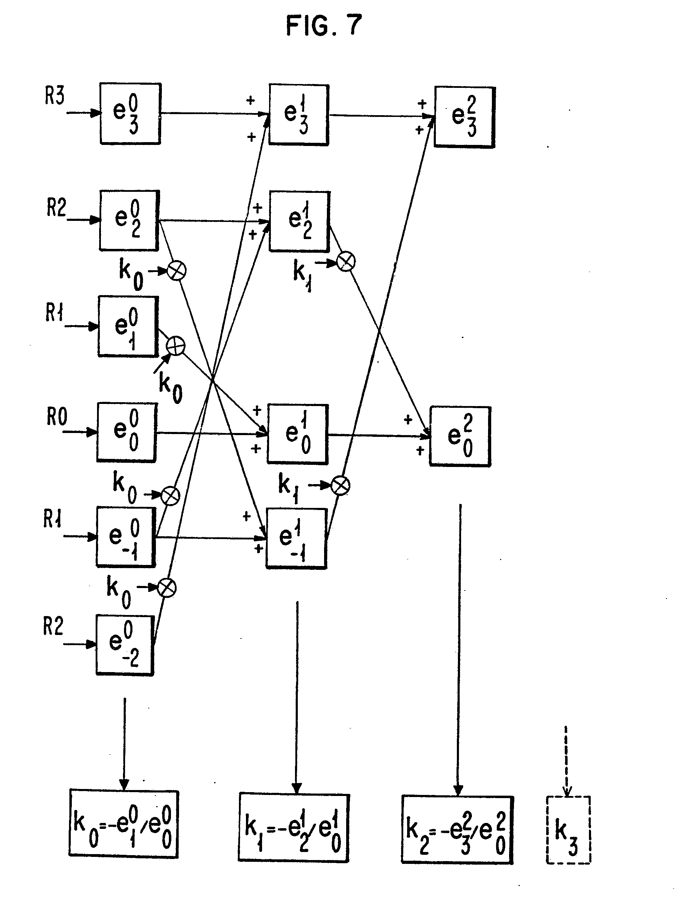

Les termes $R'_i$ sont ensuite introduits dans un circuit d'autocorrélation partielle COMP $k_i$ engendrant les termes $k_i$ définis par Le Roux et Guegen, termes ici définis par rapport aux coefficients d'autocorrélation pré-emphasés $R'_i$ et non par rapport aux termes $R_i$. Le dispositif COMP $k_i$ peut être réalisé à l'aide d'un calculateur programmé pour effectuer un calcul récursif dont l'algorithme est représenté sur la figure 7 (exemple pour g=3). Les termes de type R' sont chargés dans des additionneurs de type $(e^0)$ formant un premier étage. Le contenu de ce premier étage permet de calculer $k_0$. Les sorties des additionneurs dudit premier étage, éventuellement multipliées par $k_0$ (voir figure), attaquent un second étage d'additionneurs de type $(e^1)$ (voir figure) dont le contenu permet de calculer $k_1$. Les sorties des étages du groupe $(e^1)$ éventuellement multipliées par $k_1$ attaquent un troisième étage $(e^2)$ dont le contenu permet de calculer $k_2$.

Les coefficients $k_i$ seront éventuellement requantifiés en QA2 qui peut, tout comme QA1 être d'un type classique mais posséder un pas de quantification et des caractéristiques redéfinis pour mieux s'adapter au type d'information à traiter et pour réduire le taux d'information. Par exemple, pour ce qui concerne QA2, partant de données statistiques on a requantifié les termes $k_i$ avec un nombre de bits fixe défini en fonction de l'ordre i. Le quantificateur QA2 transmet sur le canal COEF, un jeu de coeficients pour chaque bloc d'échantillons du signal vocal traité, par exemple, toutes les 32 ms.

Les traitements ci-dessus, conduisant à la détermination de ENERG, SIGNAL et COEF introduisent des retards. En effet, dans le mode de réalisation choisi à titre d'exemple, les termes $S_n$ sont pris par blocs de 256 échantillons. Pour une fréquence d'échantillonnage de 8 KHz (periode Te = 125 $\mu$s), le bloc dure donc 32 ms. Les retards dûs à chacun des filtres HPF et LPFD sont de 28 × 125 $\mu$s; celui dû au dispositif CALC effectuant des corrélations est de 32 ms. Pour que les termes COEF et SIGNAL soient en phase, il faut donc que SBC introduise un retard de 32 ms. Or le retard dû au filtre de SBC est

7

de 144 × 125 $\mu$s. On doit donc ajouter sur la voie conduisant à la sortie SIGNAL la ligne à retard de 112 × 125 $\mu$s. Pour les mêmes raisons on place une ligne à retard de 256 × 125 $\mu$s sur le trajet ENERG. (Ces lignes à retard n'ont pas été représentées sur la figure 1).

Des modifications peuvent être apportées aux schémas que l'on vient de décrire, sans sortir du cadre de l'invention. Par exemple, dans un mode de réalisation simplifié, on a supprimé le filtre HPF.

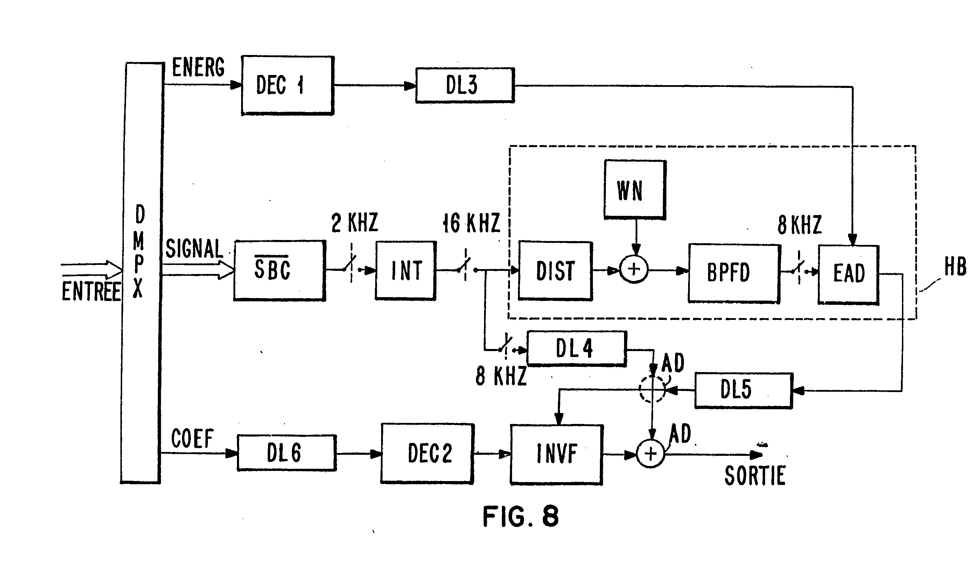

Lorsque l'on veut reconstituer le signal vocal d'origine, à savoir le signal $S_n$, il faut recombiner les données ENERG, SIGNAL et COEF. Ces opérations sont effectuées dans un récepteur-décodeur qui peut être réalisé selon le schéma de la figure 8. Les données arrivant sur la ligne d'entrée y sont tout d'abord démultiplexées en DMPX séparant ainsi les informations des canaux ENERG, SIGNAL et COEF les unes des autres.

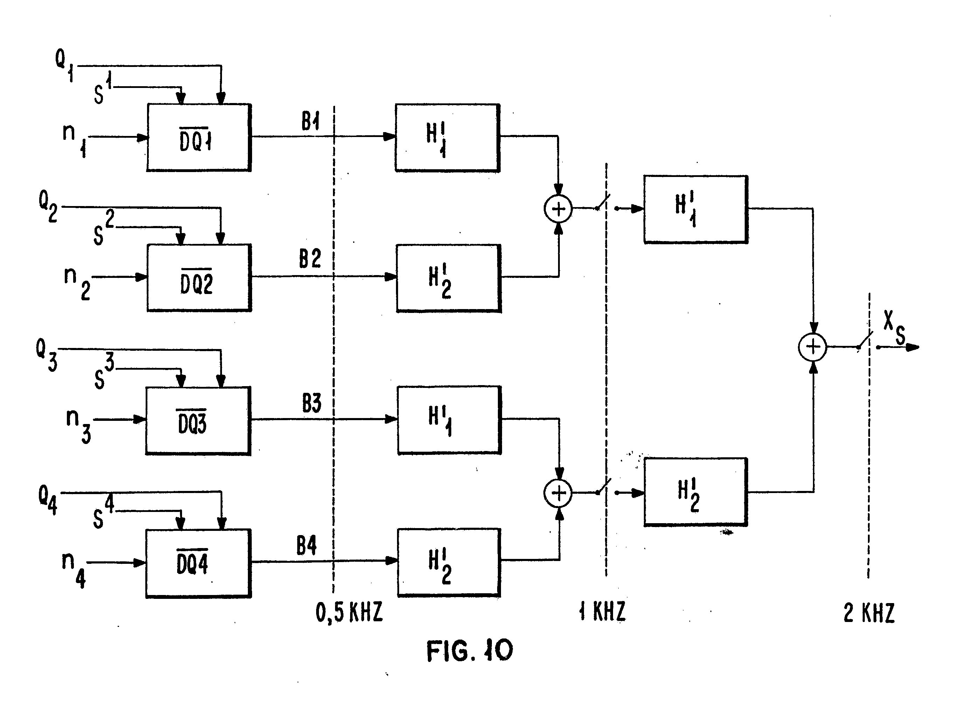

L'information SIGNAL est tout d'abord décodée en $\overline{\text{SBC}}$ chargé de restituer les échantillons $X_s$. Le dispositif $\overline{\text{SBC}}$ représenté sur la figure 10 comporte quatre dispositifs $\overline{\text{DQ1}}$ à $\overline{\text{DQ4}}$ (on a choisi à titre d'exemple p=4) attaquant un ensemble de filtres $\overline{\text{FB}}$ réalisant l'opération inverse de celle résultant de la présence de l'ensemble de filtres utilisé à l'émission et représenté par FB sur la figure 3.

Le dispositif $\overline{\text{DQi}}$ traitant la sous-bande i reçoit les échantillons requantifiés $S^i$, et les informations $n_i$ et $Q_i$. Il en déduit l'information relative à la bande $B_i$ telle qu'elle apparaissait à la sortie du filtre FB à l'émission (voir figure 3). Pour ce faire, si l'on suppose que $n_i=1$ par exemple, le dispositif $\overline{\text{DQi}}$ fournit sur sa sortie la valeur numérique correspondant à $Q_i$ lorsque $S^i=1$ et à $-Q_i$ lorsque $S^i=0$. Les sorties des circuits $\overline{\text{DQ1}}$ à $\overline{\text{DQ4}}$ sont recombinées dans un ensemble de filtrage et d'interpolation de manière à reconstituer le signal $X_s$ d'origine, à 2 KHz. Le filtrage est réalisé à l'aide d'éléments $H'_1$ et $H'_2$ qui sont des filtres demi-bande en quadrature respectivement passe haut et passe bas. L'interpolation est obtenue en intercalant un zéro entre deux échantillons d'entrée consécutifs, puis en additionnant des sorties des filtres pris deux à deux de manière à retrouver des $X_s$ à 2 KHz.

La fréquence des $X_s$ est ramenée à 16 KHz par un interpolateur INT. Ce dispositif calcule les échantillons intermédiaires à placer entre deux échantillons consécutifs à 2 KHz, l'interpolation peut être réalisée par l'intermédiaire d'un filtre. Le trajet du signal $X_s$ sortant de l'interpolateur est scindé en deux voies, l'une directe, l'autre indirecte. La voie indirecte comprend un générateur de bande haute HB dans lequel on opère en étalement du spectre de la bande basse, par distorsion non linéaire (en DIST), une extraction de la bande haute par filtrage en BPFD et une modulation en EAD de ladite bande haute par l'information d'énergie fournie par le canal ENERG. En outre, comme certains sons, les fricatifs par exemple, fournissent un niveau d'énergie très faible en bande basse, l'énergie du signal fourni par DIST risque d'être insuffisante pour les besoins du décodeur de l'invention. On a donc rajouté à la sortie de DIST, une énergie fournie par un générateur de bruit blanc WN. Le niveau de cette énergie doit être réglé de manière à ce qu'elle assure ses fonctions pour les sons à énergie faible en bande basses fréquences, sans perturber le fonctionnement lors du traitement de sons voisés. Il faut pour cela que le bruit blanc ait une amplitude faible par rapport à l'énergie de la bande haute des sons voisés. Le réglage de WN peut être réalisé empiriquement ou dynamiquement comme on le verra plus loin. Le signal résultant de l'adjonction du bruit blanc à l'information issue de DIST passe à travers le filtre passe bande décimateur PBFD, dont la fréquence de coupure inférieure est à 800 Hz. L'opération de décimation réalisée en BPFD ramène la fréquence des échantillons à 8 KHz. Ces échantillons sont introduits dans le dispositif EAD qui fournit une information su la bande hautes fréquences du signal vocal reçue en normalisant le niveau de la bande haute. Cette normalisation est obtenue par mesure de l'énergie E2 issue du filtre passe bande décimateur BPFD, comparaison de E2 avec l'énergie E1 issue du décodeur DEC 1 placé sur le canal ENERG et finalement modulation du signal issu de BPFD par le résultat de cette comparison. DEC 1 réalise l'opération inverse de celle opérée en QA1, c'est-à-dire qu'il fournit l'information d'énergie exprimée avec les mêmes unités que celles utilisées en EN pour obtenir la bande hautes fréquences réelle du signal vocal reçu par le décodeur-récepteur. La sortie de EAD est filtrée par un filtre numérique INVF du type transversal dont les coefficients sont fournis par le canal COEF dont le contenu a été décodé en DEC 2. Le dispositif DEC 2 réalise une double opération: la première est inverse de celle effectuée par QA2 et a pour but d'engendrer les termes $k_i$, la seconde doit fournir les termes $a_i$ à partir des $k_i$. En pratique, on peut éviter la conversion des $k_i$ en $a_i$ et utiliser directement les $k_i$ comme coefficients du filtre INVF, à condition de réaliser celui-ci selon le réseau maillé tel qu'il a été défini par J. D. Markel et al dans leur ouvrage intitué "Linear Prediction of Speech" au paragraphe 5.4.

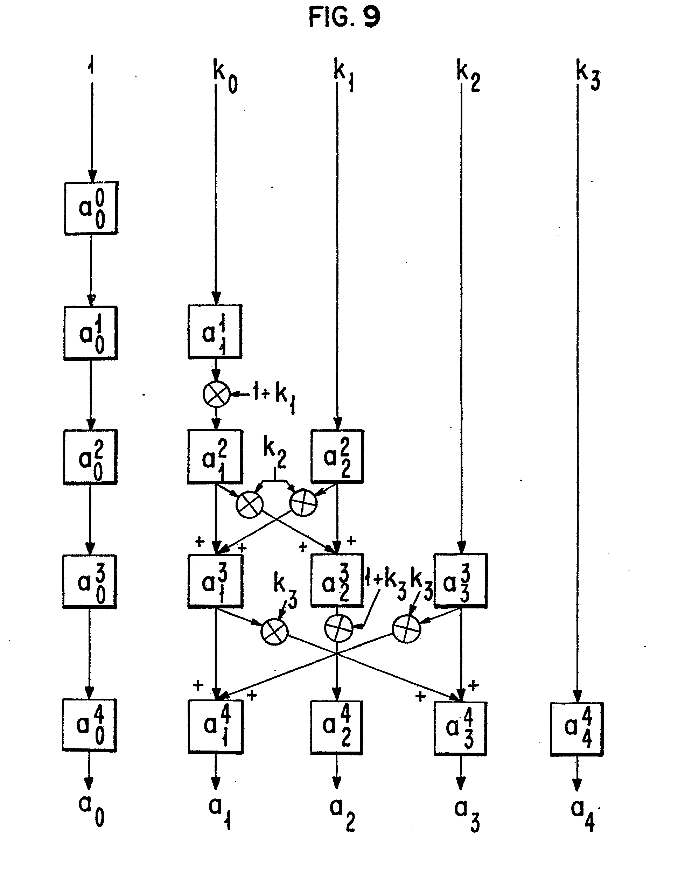

Dans le cas où l'on désire utiliser les $a_i$, on les recalculera à l'aide de l'algorithme de la figure 9 (dont la représentation obéit à un symbolisme semblable à celui utilisé pour le figure 7).

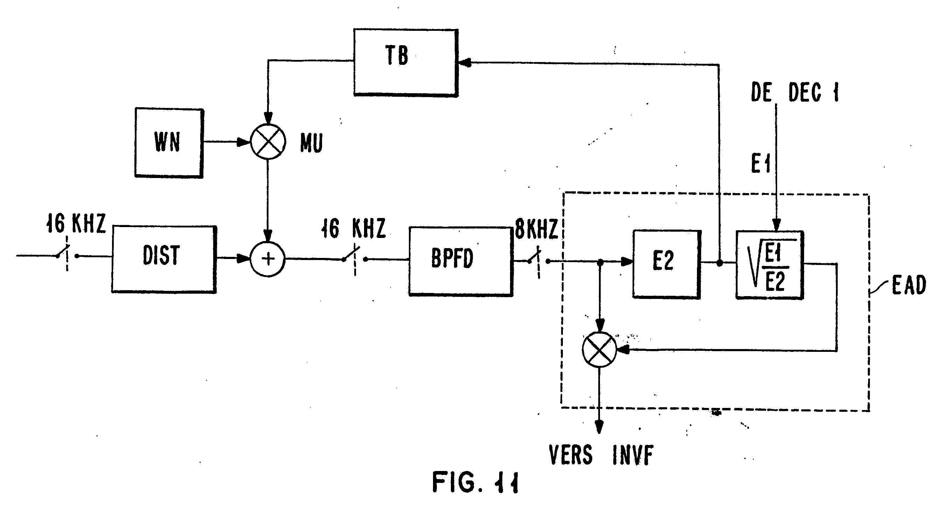

On a vu plus haut l'intérêt de la source de bruit blanc WN. On a vu aussi qu'il était possible de régler empiriquement et de manière fixe l'amplitude des signaux qu'elle fournissait: on part pour cela d'une évaluation statistique et empirique du niveau de l'énergie E2. Mais, ayant mesuré l'énergie E2 on peut aussi se servir du résultat de cette mesure pour affiner le réglage de WN. Pour ce faire, on a rajouté sur la figure 11 représentant une variante de HB, un multiplicateur MU multipliant la sortie de WN par un coefficient (par exemple compris entre 1 et 10), fourni par une table TB dont la lecture peut dépendre soit de E2, soit du rapport entre E1 et E2.

Finalement, le signal vocal d'origine est reconstitué en additionnant en AD les $X_s$ issus de INT ramenés à 8 KHz.

Tout comme on l'a indiqué pour l'émetteur, les traitements opérés sur les différentes voies ENERG, SIGNAL et COEF introduisent des retards. Avant de recombiner ces informations pour régénérer le signal vocal, il faut compenser ces retards. Ceci explique la présence sur la figure 8 des éléments à retard DL3, DL4, DL5 et DL6 introduisant respectivement des retards de 32 ms; 10,5 ms; 7 ms et 32 ms. On a supposé pour cela que le dispositif de décodage $\overline{SBC}$, l'interpolateur INT et le filtre BPFD introduisaient respectivement des retards égaux à 18 ms; 3,5 ms et 3,5 ms.

On peut en outre améliorer les performances de récepteur objet de la figure 8, en modifiant les coefficients $a_i$ ou $k_i$ plus d'une fois en 32 ms. Il suffit de déterminer entre deux jeux de coefficients $a_i$ réellement reçu, des coefficients intermédiaires calculés par interpolation linéaire en tenant compte des jeux de $a_i$ se rapportant aux blocs de données précédant et suivant immédiatement le bloc en traitement.

Par ailleurs, dans le cas où à l'émission on aurait supprimé le filtre HPF, il faudrait, à la réception placer l'additionneur AD de reconstitution du signal vocal à l'entrée du filtre INVF au lieu de le mettre à sa sortie. (Voir circuit AD en pointillés sur la figure 8).

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

ANNEXE      TABLEAU

$$
\begin{bmatrix}
0 & 0 & \cdot & \cdot & 0 & S_0 \\
0 & 0 & \cdot & 0 & S_0 & S_1 \\
\cdot & & & & & \\
\cdot & & & & & \\
\cdot & & & & & \\
\cdot & & & & & \\
0 & S_0 & \cdot & \cdot & S_{g-3} & S_{g-2} \\
S_0 & S_1 & \cdot & \cdot & \cdot & S_{g-1} \\
\cdot & & & & & \\
\cdot & & & & & \\
\cdot & & & & & \\
\cdot & & & & & \\
S_{k-g-1} & S_{k-g} & \cdot & \cdot & \cdot & S_{k-2} \\
S_{k-g} & \cdot & \cdot & \cdot & \cdot & S_{k-1} \\
S_{k-g-1} & \cdot & \cdot & \cdot & S_{k-1} & 0 \\
\cdot & & & & & \\
\cdot & & & & & \\
\cdot & & & & & \\
S_{k-2} & S_{k-1} & 0 & \cdot & \cdot & 0 \\
S_{k-1} & 0 & 0 & \cdot & \cdot & 0
\end{bmatrix}
\begin{bmatrix}
a_g \\
a_{g-1} \\
\vdots \\
a_1
\end{bmatrix}
+
\begin{bmatrix}
S_1 \\
S_2 \\
\cdot \\
\cdot \\
\cdot \\
\cdot \\
S_{g-1} \\
S_g \\
\cdot \\
\cdot \\
\cdot \\
S_{k-1} \\
0 \\
0 \\
\cdot \\
\cdot \\
\cdot \\
0 \\
0
\end{bmatrix}
= 0
$$

9

# 0 002 998

**Revendications**

1. Procédé de compression numérique d'un signal vocal considéré par blocs d'échantillons, ladite compression résultant d'un transcodage, caractérisé en ce qu'il comporte les étapes suivantes:

scission du spectre dudit signal vocal en une première et une seconde bandes de fréquences,

codage numérique et requantification du contenu de ladite première bande de fréquences de manière à engendrer une information dite SIGNAL,

traitement du contenu de ladite seconde bande de fréquences de manière à en déduire en jeu de coefficients de corrélation partielle COEF pour chaque bloc d'échantillons traité,

traitement du contenu de ladite première bande de fréquences de manière à en déduire une information d'énergie ENERG de la partie hautes fréquences du spectre du signal à comprimer considéré par blocs d'échantillons,

les données SIGNAL, COEF et ENERG définissant numériquement les informations contenues dans chacun desdits blocs d'échantillons.

2. Procédé de compression numérique d'un signal vocal selon la revendication 1, caractérisé en outre en ce que la juxtaposition desdites première et seconde bandes de fréquences couvre l'ensemble du spectre du signal vocal à comprimer.

3. Procédé de transcodage par blocs d'échantillons d'un signal vocal exprimé numériquement, caractérisé en ce qu'il comporte les opérations suivantes:

scission du spectre dudit signal vocal en une bande basses-fréquences et en une bande hautes fréquences,

codage de l'information de ladite bande basses-fréquences par répartition de son spectre en plusiers sous-bandes et quantification de chacune des sous bandes avec un taux de bits déterminé pour chaque bloc d'échantillons en fonction de l'énergie contenue dans ladite sous-bande, ledit codage de l'ensemble de la bande basse fréquences fournissant une information dite SIGNAL,

traitement du contenu de ladite bande hautes fréquences de manière à en déduire en jeu de coefficients de corrélation partielle COEF pour chaque bloc d'échantillons traité, détermination d'une information d'énergie ENERG de la partie hautes fréquences du spectre du signal à comprimer considéré par blocs d'échantillons,

multiplexage sur une ligne de transmission, des données SIGNAL, COEF et ENERG.

4. Dispositif de compression numérique d'un signal vocal mettant en oeuvre le procédé selon l'une des revendications 1 à 3, comportant:

une entrée,

des premiers moyens (FT) pour appliquer sur ladite entrée les échantillons d'une bande de fréquence donnée du signal vocal considéré par blocs de longueur constante,

des seconds moyens (HPL et LPFD) reliés à ladite entrée et scindant le spectre du signal appliqué en une bande hautes fréquences et une bande basses fréquences ayant subi des opérations de décimation,

des troisièmes moyens (CALC et QA2) recevant l'information de ladite bande haute et engendrant les coefficients d'autocorrélation partielle COEF du signal qu'elle contient,

des quatrièmes moyens (SBC) recevant l'information de ladite bande basse soumise à une opération de décimation et la quantifiant par découpage en sous-bandes et adaptation dynamique du taux de bits effecté à la quantification de chaque sous-bande en fonction de l'énergie contenue dans ladite sous bande, de manière à engendrer une information dite SIGNAL,

des moyens (EN et QA1) de détermination d'énergie de la bande hautes fréquences reliés à ladite entrée et auxdits seconds moyens et engendrant une information ENERG,

des moyens (MPX) recevant lesdites informations COEF, SIGNAL et ENERG et les multiplexant sur une même ligne de transmission.

5. Dispositif de compression numérique d'un signal vocal selon la revendication 4 caractérisé en ce que la détermination desdits coefficients de corrélation partielle est effectuée à l'aide d'un système (CALC) comportant:

une borne d'entrée,

des premiers moyens pour appliquer les échantillons du signal à traiter sur ladite borne d'entrée,

des moyens générateurs de fonctions d'autocorrélation (COMP $R_i$) pour déterminer un jeu de coefficients de corrélation pour chacun desdits blocs d'échantillons, et pour engendrer le rapport entre les deux primiers termes dudit jeu de coefficients, lesdits moyens étant reliés à ladite borne d'entrée.

un filtre de pré-emphase (COMP $R'_i$) utilisant ledit rapport et dont l'entrée est reliée à la sortie desdits moyens générateurs de fonctions d'autocorrélation,

des moyens d'autocorrélation partielle (COMP $R_i$) dont l'entrée est reliée à la sortie dudit filtre de pré-emphase et dont la sortie délivre lesdits coefficients de corrélation partielle.

6. Procédé de décodage d'un signal vocal codé selon le procédé suivant l'une des revendications

10

1 à 3 caractérisé en ce qu'il comporte les opérations suivantes:

séparation des informations ENERG, SIGNAL et COEF, les unes des autres, et décodage desdites informations,

interpolation linéaire des informations du canal SIGNAL décodé, et scission dudit canal en deux voies, l'une directe, l'autre indirecte,

traitement de ladite voie indirecte par distorsion, filtrage passe haut et normalisation de son niveau d'énergie par l'information du canal ENERG,

filtrage de l'information véhiculée par la sortie de ladite voie indirecte par un filtre dont les coefficients sont obtenus à partir de l'information COEF,

addition du contenu de ladite voie directe au résultat de ladite opération de filtrage.

7. Procédé de décodage selon la revendication 6 caractérisé en ce qu'une énergie de bruit blanc est ajoutée au signal apparaissant sur ladite voie indirecte après distorsion.

8. Procédé de décodage selon l'une des revendications 6 ou 7 caractérisé en outre en ce que le niveau de ladite énergie de bruit blanc est dynamiquement réglé en fonction du niveau d'énergie mesuré sur ladite voie indirecte.

9. Dispositif de décodage de l'information relative à un signal vocal, mettant en oeuvre le procédé des revendications 6 à 8 et comportant:

une entrée recevant le signal codé selon l'une des revendications 1 à 3,

des moyens de séparation (DMPX) reliés à ladite entrée et séparant les données ENERG, SIGNAL et COEF en un premier, un second et un troisième canal respectivement,

des moyens de décodage (DEC1, $\overline{SBC}$ et DEC2) dont les entrées sont reliées respectivement auxdits premier, second et troisième canaux,

des moyens d'interpolation (INT) dont l'entrée est reliée à la sortie des moyens de décodage dudit second canal et dont la sortie alimente deux voies l'une directe, l'autre indirecte,

des moyens reliés à ladite voie indirecte et comportant:

des premiers moyens (DIST) dits de distorsion non linéaire,

des seconds moyens (WN) dits de génération de bruit blanc,

des troisièmes moyens (+) dits d'addition dont les entrées sont reliés aux sorties desdits, premiers et seconds moyens,

des quatrièmes moyens (BPFD) dits de filtrage et décimation dont l'entrée est reliée à la sortie desdits troisièmes moyens,

des cinquièmes moyens (EAD) dits de modulation par l'information enregistrée dont les entrées sont reliées aux sorties desdits quatrième moyens et des moyens de décodage dudit premier canal,

des moyens de filtrage (INVF) dont l'entrée est reliée à la sortie desdits cinquième moyens et dont les coefficients sont fournis par les moyens de décodage dudit troisième canal,

des moyens (AD) de reconstitution du signal vocal par addition dont les entrées sont reliées à la sortie desdits moyens de filtrage et à ladite voie directe, et dont la sortie fournit le signal vocal décodé.

10. Dispositif de décodage de l'information relative à un signal vocal selon la revendication 9 caractérisé en ce que ledit troisième canal comporte en outre des moyens d'interpolation des coefficients.

11. Dispositif de décodage de l'information relative à un signal vocal, selon l'une des revendications 9 ou 10, caractérisé en outre en ce que lesdits cinquième moyens dits de modulation par l'information énergie comportent:

des moyens de mesure d l'énergie E2 fournie par lesdits quatrièmes moyens,

des moyens de comparaison de E2 avec l'énergie E1 fournie par lesdits moyens de décodage appartenant au premier canal,

des moyens de modulation de l'énergie fournie par lesdits moyens de génération de bruit blanc par un coefficient déterminé à partir de l'information fournie par lesdits moyens de comparaison.

## Claims

1. Method for digitally compressing a voice signal taken by sample blocks, said compression resulting from a transcoding operation, characterized in that it includes the following steps:

dividing the spectrum of said voice signal into a first and second frequency band,

digitally coding and requantizing the contents of said first frequency band in order to generate data referred to as data SIGNAL,

processing the contents of said second frequency band in order to generate a set of partial correlation coefficients COEF for each sample block processed,

processing the contents of said first frequency band in order to generate the energy data ENERG related to the high frequency portion of the bandwidth of the signal to be compressed, taken by sample blocks,

**0 002 998**

whereby data SIGNAL, COEF and ENERG define the information contained in each of said sample blocks in digital form.

2. Method for digitally compressing a voice signal according to claim 1, furthermore characterized in that the juxtaposition of said first and second frequency bands covers the whole spectrum of the voice signal to be compressed.

3. Method for transcoding a digital voice signal by sample blocks, characterized in that it includes the following operations:

dividing the spectrum of said voice signal into a low frequency band and a high frequency band,

coding the data of said low frequency band by dividing its bandwidth into several sub-bands and quantizing each of the sub-bands with a bit rate depending for each sample block upon the energy contained in said sub-band, said coding of the whole low frequency band generating the data SIGNAL,

processing the contents of said high frequency band in order to generate a set of partial correlation coefficients COEF for each sample block processed,

determining the energy data ENERG related to the high frequency portion of the spectrum of the signal to be processed, taken by sample blocks,

multiplexing said SIGNAL, COEF and ENERG data on a transmission line.

4. Device for digitally compressing a voice signal for implementing the method according to one of claims 1 to 3, including:

an input,

first means (FT) for applying to said input the samples within a given frequency band of the voice signal taken by constant length blocks,

second means (HPF and LPFD) connected to said input for dividing the frequency spectrum of the applied signal having been submitted to decimation into a high frequency band and a low frequency band,

third means (CALC and QA2) for receiving said high frequency band data and generating the partial autocorrelation coefficients COEF of the signal contained therein,

fourth means (SBC) for receiving the data submitted to decimation of said low frequency band and quantizing it by dividing it into sub-bands and by dynamically adapting the bit rate assigned to the quantization of each sub-band in accordance with the energy contained in said sub-band in order to generate the data referred to as data SIGNAL,

means (EN and QA1) for determining the energy of the high frequency band, connected to said input and to said second means, and for generating data ENERG,

means (MPX) for receiving said COEF, SIGNAL and ENERG data and for multiplexing it on the same transmission line.

5. Device for digitally compressing a voice signal in accordance with claim 4, characterized in that said partial correlation coefficients are determined by means of a system (CALC) including:

an input terminal,

first means for applying the samples of the signal to be processed to said input terminal,

means for generating the autocorrelation functions (COMP $R_i$) in order to determine a set of correlation coefficients for each of said sample blocks and for generating the ratio between the two first terms of said coefficient set, said means being connected to said input terminal,

a pre-emphasis filter (COMP $R_i'$) using said ratio, whose input is connected to the output of said means for generating the autocorrelation functions,

means for partial autocorrelation (COMP $R_i$), whose input is connected to the output of said pre-emphasis filter, and whose output delivers said partial correlation coefficients.

6. Method for decoding a voice signal using the method according to one of claims 1 to 3, characterized in that it includes the following operations:

separating data ENERG, SIGNAL and COEF from each other, and decoding said data,

linearly interpolating the decoded data of the SIGNAL channel and dividing said channel into a direct path and an indirect path,

processing said indirect path by distortion, high-pass filtering and normalization of its energy level by the data of the ENERG channel,

filtering the data transmitted by the output of said indirect path by a filter whose coefficients are obtained from data COEF,

adding the contents of said direct path to the result of said filtering process.

7. Method for decoding according to claim 6, characterized in that a white noise energy is added to the signal appearing on said indirect path after distortion.

8. Method for decoding according to claim 6 or 7, furthermore characterized in that the level of said white noise energy is dynamically adjusted depending on the energy level measured on said indirect path.

9. Means for decoding voice signal data for implementing the method according to claims 6 to 8, including:

an input receiving the coded signal according to claims 1 to 3,

12

**0 002 998**

separating means (DMPX) connected to said input, for separating data ENERG, SIGNAL and COEF into a first, second and third channel respectively,

decoding means (DEC1, SBC and DEC2) whose inputs are connected to said first, second and third channels respectively,

interpolating means (INT) whose entry is connected to the output of the decoding means of said second path, and whose output feeds two paths, one direct and the other indirect,

means connected to said indirect path, including:

first non-linear distortion means (DIST),

second white noise generation means (WN),

third adding means (+) whose inputs are connected to the outputs of said first and second means,

fourth filtering and decimation means (BPFD) whose input is connected to the output of said third means,

fifth means for modulation by energy data (EAD) whose inputs are connected to the outputs of said fourth means and of the decoding means of said first channel,

filtering means (INVF) whose input is connected to the output of said fifth means and whose coefficients are provided by the decoding means of said third channel,

means for restoring the voice signal by an adding process (AD), whose inputs are connected to the output of said filtering means and said direct path and whose output supplies the decoded voice signal.

10. Device for decoding the voice signal data according to claim 9, characterized in that said third channel also includes means for coefficient interpolation.

11. Device for decoding the voice signal data according to claim 9 or 10, furthermore characterized in that said fifth means for modulation by energy data include:

means for measuring energy E2 supplied by said fourth means,

means for comparing energy E2 with energy E1 supplied by said decoding means being part of the first channel,

means for modulating the energy supplied by said white noise generation means by a coefficient derived from the data provided by said comparing means.

## Patentansprüche

1. Verfahren zur numerischen Kompression eines in Form von Stichprobenblocks ausgewählten Sprachsignals, wobei sich die Kompression durch Transcodieren ergibt, gekennzeichnet durch folgende Verfahrensschritte:

Aufteilen des Spektrums des Sprachsignals in ein erstes und zweites Frequenzband;

Numerische Codierung und erneute Quantisierung des Inhalts des ersten Frequenzbandes zum Erzeugen einer SIGNAL bezeichneten Information;

Verarbeiten des Inhalts des zweiten Frequenzbandes in der Weise, daß sich daraus für jeden verarbeiteten Stichprobenblock ein Satz partieller Korrelationskoeffizienten COEF ergibt;

Verarbeiten des Inhalts des ersten Frequenzbandes in der Weise, daß sich daraus eine die Energie (ENERG) des Hochfrequenzteils des Spektrums des zu komprimierenden und in Stichprobrobenblocks ausgewählten Signals betreffende Information ergibt,

wobei die Daten SIGNAL, COEF und ENERG, numerisch die in jedem der Stichprobenblocks enthaltene Information definieren.

2. Verfahren zur numerischen Kompression eines Sprachsignals nach Anspruch 1, ferner dadurch gekennzeichnet, daß das Nebeneinanderreihen des ersten und zweiten Frequenzbandes den gesamten Bereich des Spektrums des zu komprimierenden Sprachsignals einschließt.

3. Verfahren zum Transcodieren eines numerisch in Stichprobenblocks dargestellten Sprachsignals, gekennzeichnet durch folgende Verfahrensschritte:

Unterteilen des Spektrums des Sprachsignals in ein Niederfrequenzband und ein Hochfrequenzband;

Codieren der in dem Niederfrequenzband enthaltenen Information durch Unterteilen des Spektrums in mehrere Teilbänder und Quantisierung jedes dieser Teilbänder mit einer für jeden Stichprobenblock in Abhangigkeit von der in diesem Teilband enthaltenen Energie bestimmten Bitübertragungsgeschwindigkeit, wobei das Codieren des gesamten Niederfrequenzbandes die mit SIGNAL bezeichnete Information erzeugt;

Verarbeiten des Inhalts des Hochfrequenzbandes in der Weise, daß daraus für jeden verarbeiteten Stichprobenblock einen Satz partieller Korrelationskoeffizienten COEF abgeleitet wird;

Bestimmen der den Hochfrequenzteil des Spektrums des in Stichprobenblocks zu komprimierenden Signals betreffenden Energie ENERG und

Übertragen der Daten SIGNAL, COEF und ENERG auf einer Übertragungsleitung im Multiplexbetrieb.

13

4. Vorrichtung zur numerischen Kompression eines Sprachsignals gemäß dem Verfahren nach den Ansprüchen 1 bis 3, gekennzeichnet durch

einen Eingang, dem durch eine erste Vorrichtung (FT) die als Blocks konstanter Länge ausgewählten Stichproben eines vorbestimmten Frequenzbandes des Sprachsignals zuführbar sind,

durch eine zweite, am Eingang angeschlossene Vorrichtung (HPF und LPFD), die das Spektrum des zugeführten und einer Dezimierungsoperation unterzogenen Signals in ein Hochfrequenzband und ein Niederfrequenzband unterteilt,

durch eine dritte Vorrichtung (CALC und QA2) zum Empfang der Information des Hochfrequenzbandes, die dann die partiellen Autokorrelationskoeffizienten COEF des darin enthaltenen Signal erzeugt, ferner

durch eine vierte Vorrichtung (SBC), die die einer Dezimierungsoperation unterzogenen Daten des Niederfrequenzbandes aufnimmt und dieses durch Unterteilen in Teilbänder quantisiert, wobei die dynamische Anpassung der Bitübertragungsgeschwindigkeit durch die Quantisierung jedes Teilbandes als Funktion der darin enthaltenen Energie in der Weise erfolgt, daß dadurch die mit SIGNAL bezeichnete Information erzeugt wird, sowie

durch eine an den Eingang und an die zweite Vorrichtung angeschlossene Vorrichtung (EN und QA1) zur Energiebestimmung des Hochfrequenzbandes, welches die mit ENERG bezeichnete Information erzeugt, und

durch eine Vorrichtung (MPX) zum Empfang der Daten COEF, SIGNAL und ENERG und zu deren Multiplexübertragung über die Übertragungsleitung.

5. Vorrichtung zur numerischen Sprachdatenkompression nach Anspruch 4, dadurch gekennzeichnet,
daß zur Bestimmung der partiellen Korrelationskoeffizienten ein System (CALC) benutzt wird,

bestehend aus einer Eingangsklemme und einer daran eingangsseitig angeschlossenen ersten Vorrichtung zum Anlegen der zu verarbeitenden Signalstichproben,

aus einer an die Eingangsklemme angeschlossenen Vorrichtung zum Erzeugen der Autokorrelationsfunktionen (COMP $R_i$), die für jeden Stichprobenblock einen Satz Korrelationskoeffizienten bestimmt, und die die Beziehung zwischen den ersten zwei Begriffen des Koeffizientensatzes herstellt,

aus einem diese Beziehung benutzenden Preemphasisfilter (COMP $R'_i$), dessen Eingang an den Ausgang der Vorrichtung zur Erzeugung der Autokorrelationsfunktionen angeschlossen ist, und

aus einer Vorrichtung zur partiellen Autokorrelation (COMP $R_i$), deren Eingang an den Ausgang des preemphasisfilters angeschlossen ist und deren Ausgang die partiellen Korrelationskoeffizienten liefert.

6. Verfahren zum Decodieren eines gemäß dem Verfahren nach Ansprüchen 1 bis 3 codierten Sprachsignals, gekennzeichnet durch folgende Verfahrensschritte:

Trennen der mit ENERG, SIGNAL und COEF bezeichneten Information voneinander und Decodierern dieser Informationen,

lineare Interpolation der die decodierten Informationen des Kanals SIGNAL enthaltenden Information, und Unterteilen dieses Kanals in zwei Pfade, einen direkten Pfad und einen indirekten Pfad,

Verarbeiten des indirekten Pfades durch Verzerrung, Anwendung eines Hochpaßfilters, und Normalisierung seines Energiepegels mit Hilfe der Information des Kanals ENERG,

Filtern der vom Ausgang des indirekten Pfades übertragenen Information über ein Filter, dessen Koeffizienten aus der Information des kanals COEF abgeleitet sind und

Addieren des Inhalts des direkten Pfades zum Ergebnis der Filteroperation.

7. Decodierverfahren nach Anspruch 6, dadurch gekennzeichnet, daß dem auf dem indirekten Pfad nach der Verzerrung auftretenden Signal eine weiße Rauschenergie zugefügt wird.

8. Decodierverfahren nach Anspruch 6 oder 7, dadurch gekennzeichnet, daß der Pegel der weißen Rauschenergie dynamisch als Funktion des auf dem indirekten Pfad gemessenen Energiepegels gesteuert wird.

9. Vorrichtung zum Decodieren von Sprachsignalinformation gemäß dem Verfahren nach Ansprüchen 6 bis 8, gekennzeichnet durch

einen Eingang zur Aufnahme eines gemäß den Ansprüchen 1 bis 3 codierten Signals,

durch eine an den Eingang angeschlossene Trennvorrichtung (DMPX), die die Daten ENERG, SIGNAL und COEF auf einen ersten, zweiten und dritten Kanal aufteilt,

durch eine Decodiervorrichtung (DEC1, SBC und DEC2), deren Eingänge an den ersten, zweiten und dritten Kanal angeschlossen sind sowie

durch eine Interpolationsvorrichtung (INT), die eingangsseitig an den Ausgang der Decodiervorrichtung des zweiten Kanals angeschlossen ist, und deren Ausgang einen direkten und indirekten Pfad speist, und

durch eine an den indirekten Pfad angeschlossene Vorrichtung, bestehend aus

einer ersten, eine nicht-lineare Verzerrung erzeugenden Vorrichtung (DIST),

einer zweiten, ein weißes Rauschen erzeugenden Vorrichtung (WN),

einer dritten Vorrichtung (+) für Addition, deren Eingänge an die Ausgänge der ersten und zweiten Vorrichtung angeschlossen sind,

einer vierten eine Filterwirkung und eine Dezimierung bewirkende Vorrichtung (BPFD), deren Eingang an den Ausgang der dritten Vorrichtung angeschlossen ist, und

einer fünften Vorrichtung zur Modulation durch die aufgezeichnete Information (EAD), welche eingangsseitig an den Ausgängen der vierten Vorrichtung und der Decodiervorrichtung des ersten Kanals angeschlossen ist, sowie

durch eine Filtervorrichtung (INVF), deren Eingang an den Ausgang der fünften Vorrichtung angeschlossen ist und deren Koeffizienten von der Decodiervorrichtung des dritten Kanals geliefert werden, und

durch eine das Sprachsignal durch Addieren wiederherstellende Vorrichtung (AD), deren Eingänge an den Ausgang der Filtervorrichtung und an den direkten Pfad angeschlossen sind, und deren Ausgang das decodierte Sprachsignal liefert.

10. Vorrichtung zum Decodieren von Sprachsignalinformation nach Anspruch 9, dadurch gekennzeichnet,

daß der dritte Kanal überdies eine Vorrichtung zur Interpolation der Koeffizienten enthält.

11. Vorrichtung zum Decodieren von Sprachsignalinformation nach Anspruch 9 oder 10, dadurch gekennzeichnet, daß die fünfte Vorrichtung zur Modulation durch die Energie-information

eine Vorrichtung zum Messen der von der vierten Vorrichtung gelieferten Energie E2,

eine Vorrichtung zum Vergleich der Energie E2 mit der von der Decodiervorrichtung des ersten Kanals gelieferten Energie E1, und

eine Vorrichtung zur Modulation der von der Vorrichtung zum Erzeugen von weißem Rauschen gelieferten Energie mit einem Koeffizienten enthält, der durch die von der Vergleichsvorrichtung gelieferte Information bestimmt ist.

SORTIE

M P X

ENERG

SIGNAL

COEF

QA1

SBC

QA2

$X_S$

2 KHZ

$k_i$

EN

LPFD

CALC

$S_n$

HPF

8 KHZ

A/D

FT

ENTREE

Stt)

**FIG.1**

1

# FIG. 2

FIG.3

0 002 998

## FIG. 4

1 KHZ    0,5 KHZ

## FIG. 5

4

FIG.6

## FIG. 7

FIG. 8

# FIG. 9

FIG. 10

FIG. 11